# EUROPÄISCHE PATENTSCHRIFT

(11) **EP 0 941 617 B1**
(45) Veröffentlichungstag und Bekanntmachung des Hinweises auf die Patenterteilung: **28.12.2005**
(21) Anmeldenummer: 98955361.5
(22) Anmeldetag: 30.09.1998
(51) Int. Cl.: H04N 17/00, H04N 5/44, H04B 7/08

(54) **Verfahren zur Bewertung der Qualität eines Fernsehsignales**
Method for assessing the quality of a television signal
Procédé pour évaluer la qualité d'un signal de télévision

(30) Priorität: 30.09.1997 DE 19743125
(43) Veröffentlichungstag der Anmeldung: 15.09.1999
(73) Patentinhaber: XSYS Interactive Research GmbH, 78050 Villingen-Schwenningen (DE)
(72) Erfinder: SCHRADI, Stefan, D-78048 Villingen-Schwenningen (DE)
(74) Vertreter: Patentanwälte Westphal, Mussgnug & Partner
(86) Internationale Anmeldenummer: PCT/DE1998/002900
(87) Internationale Veröffentlichungsnummer: WO 1999/017556

(56) Entgegenhaltungen:
- EP-A- 0 536 429
- WO-A-97/09792
- WO-A-97/28643
- WO-A-97/32404
- US-A- 4 402 013
- US-A- 4 682 230
- US-A- 5 159 454
- US-A- 5 335 010
- US-A- 5 596 372
- US-A- 5 777 693
- PATENT ABSTRACTS OF JAPAN vol. 13, no. 142 (E-739), 7. April 1989 & JP 63 304728 A (MITSUBISHI ELECTRIC CORP), 13. Dezember 1988
- PATENT ABSTRACTS OF JAPAN vol. 96, no. 10, 31. Oktober 1996 & JP 08 149060 A (MATSUSHITA ELECTRIC IND CO), 7. Juni 1996
- PATENT ABSTRACTS OF JAPAN vol. 96, no. 6, 28. Juni 1996 & JP 08 051573 A (TOSHIBA CORP), 20. Februar 1996
- PATENT ABSTRACTS OF JAPAN vol. 14, no. 414 (E-975), 7. September 1990 & JP 02 159886 A (CLARION CO LTD), 20. Juni 1990

## Beschreibung

Die Erfindung betrifft ein Verfahren zur Bewertung der Qualität eines Fernsehsignales.

In ortsfesten Fernsehempfangsstationen bereitet der Empfang keine nennenswerten Schwierigkeiten, weil die Empfangsverhältnisse weitgehend konstant sind. Dagegen können die Empfangsverhältnisse bei mobilen Empfangsstationen je nach Beschaffenheit des befahrenen Geländes erheblich schwanken, weil kurzzeitige Störimpulse und Echoimpulse auftreten können. Inzwischen werden Fahrzeuge, wie z.B. PKW und Reisebusse, aber auch Eisenbahnfahrzeuge, mit Fernsehempfängern und Bildschirmen ausgerüstet, um einerseits Nachrichten, beispielsweise über Videotext übermittelte Verkehrsmeldungen anzeigen oder andererseits die Reisenden mit Fernsehprogrammen unterhalten zu können. Aufgrund der infolge des gerade befahrenen Geländes unter Umständen erheblich schwankenden Empfangsverhältnisse in einer sich bewegenden Empfangsstation werden die Augen der reisenden Fernsehzuschauer in unangenehmer Weise stark beansprucht, weil die Bildqualität in erheblichem Maße schwanken kann. Durchfährt das Fahrzeug z. B. einen Funkschatten, so sieht der Betrachter nur noch Rauschen auf dem Bildschirm. Das Betrachten eines Fernsehprogramms mit derartigen Störungen führt eher zur Ermüdung der Zuschauer als daß es deren Unterhaltung dient.

Es ist bekannt, den Empfang von Funksignalen in mobilen Empfangsstationen durch Mehrwegeempfang, im Englischen als "Diversity" bezeichnet, zu verbessern. Unter Raum-Diversity versteht man eine System mit mehreren Empfängern, die auf gleichen Frequenzen gleiche Signale, z.B. dasselbe Fernsehprogramm, empfangen. Unter Frequenz-Diversity versteht man ein System aus ebenfalls mehreren Empfängern, die auf unterschiedlichen Frequenzen gleiche Signale, z.B. dasselbe Fernsehprogramm, empfangen. In einem Diversity-System wird nach irgendeinem Kriterium der jeweils am besten empfangende Empfänger ausgewählt. Für eine Diversity-Empfangsanlage mit mehreren Empfängern ist daher ein Kriterium zur Auswahl des am besten empfangenden Empfängers vorzusehen. Diversity-Systeme sind z. B. aus US-A-5 777 693, WO-A-97/09792, US-A-5 335 010 und JP-A-8 051 573 bekannt, wobei stets ein Qualitätskriterium überwacht und zur Empfängerauswohl herangezogen wird.

Es ist daher Aufgabe der Erfindung, ein Verfahren zur Bewertung der Qualität eines Fernsehsignales anzugeben.

Die Erfindung löst diese Aufgabe durch die folgenden, im Anspruch 1 angegebenen kennzeichnenden Merkmale:
es werden die fünf Vertikal-Einschnittimpulse detektiert;
nur wenn die fünf Vertikal-Einschnittimpulse detektiert worden sind, wird mit der Detektion der fünf Ausgleichimpulse begonnen;
nur wenn nach den fünf Vertikal-Einschnittimpulsen auch die folgenden fünf Ausgleichimpulse detektiert worden sind, werden die Horizontal-Synchronimpulse. Echoimpulse und Störimpulse detektiert;
die Anzahl der detektierten Horizontal-Synchronimpulse. Störimpulse und Echoimpulse dient als Kriterium für die Signalqualität.

In den Figuren sind Flußdiagramme gezeigt, anhand deren die Erfindung beispielhaft erläutert wird.

Es zeigen
- Figur 1: ein Flußdiagramm zur Detektion der fünf Vertikal-Einschnittimpulse.
- Figur 2: ein Flußdiagramm zur Detektion der fünf Ausgleichimpulse,
- Figur 3: ein Flußdiagramm zur Detektion der Horizontal-Synchronimpulse, und zur Bewertung der Qualität eines Fernsehsignales.

Das erfindungsgemäße Verfahren ist in drei Teilschritte aufgeteilt, die in den Flußdiagrammen dargestellt sind.

Im ersten Schritt werden die fünf Vertikal-Einschnittimpulse detektiert. Erst wenn diese fünf Vertikal-Einschnittimpulse detektiert worden sind, wird im zweiten Schritt mit der Detektion der folgenden fünf Ausgleichimpulse begonnen. Nur wenn im Anschluß an die im ersten Schritt detektierten fünf Vertikal-Einschnittimpulse im zweiten Schritt fünf Ausgleichimpulse detektiert werden, wird im dritten Schritt mit der eigentlichen Detektion der Horizontalimpulse, der Stör- und Echoimpulse begonnen, andernfalls wird weiter versucht. Vertikal-Einschnittimpulse zu detektieren.

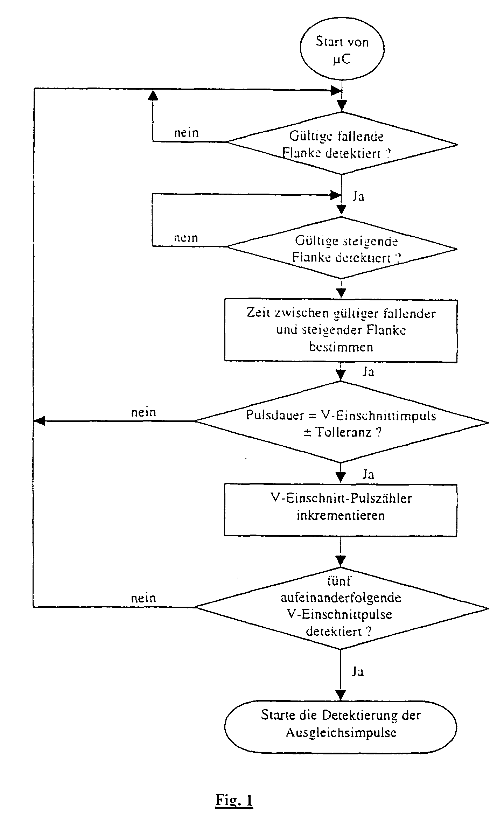

Es wird nun anhand eines Ausführungsbeispieles der Erfindung und des in der Figur 1 gezeigten Flußdiagramms erläutert, wie die fünf Vertikal-Einschnittimpulse detektiert werden.

Ein Zähler wird mit der ersten Flanke eines Impulses gestartet und mit der zweiten Flanke zurückgesetzt. Es wird geprüft, ob der Zähler fünf mal hintereinander in der Zeit, die der Impulsfolge der fünf Vertikal-Einschnittimpulse entspricht, einen vorgegebenen Zählerstand erreicht, der der Impulslänge eines Vertikal-Einschnittimpulses entspricht. Ist dies der Fall, so ist eine Impulsfolge von fünf Vertikal-Einschnittimpulsen detektiert worden, andernfalls wird die Impulsdauer weiterhin auf die Dauer eines Vertikal-Einschnittimpulses geprüft.

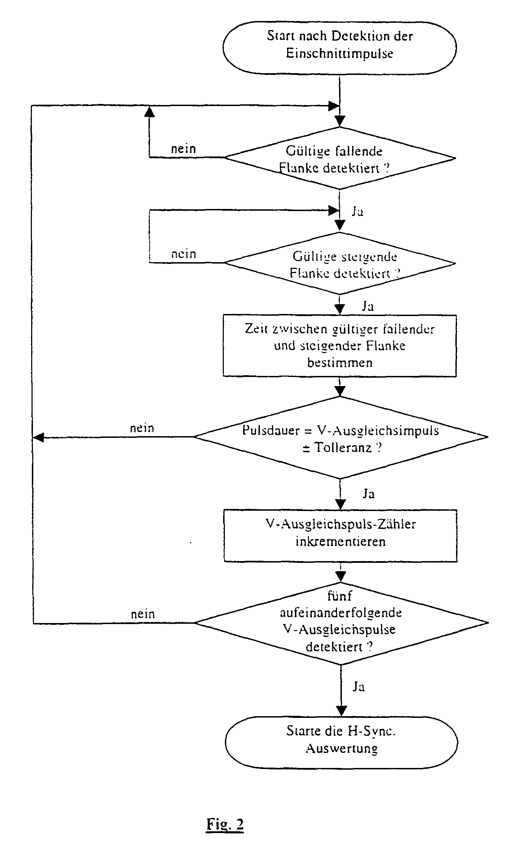

Die anschließende Detektion der fünf Ausgleichimpulse erfolgt auf die gleiche Weise wie die der fünf Vertikal-Einschnittimpulse. Sie ist im in der Figur 2 abgebildeten Flußdiagramm dargestellt.

Ein Zähler, vorzugsweise derselbe Zähler wie bei der Detektion der Vertikal-Einschnittimpulse, wird mit der ersten Flanke eines Impulses gestartet und mit der zweiten Flanke zurückgesetzt. Es wird geprüft, ob der Zähler fünf mal hintereinander in der Zeit, die der Impulsfolge der fünf Ausgleichimpulse entspricht, einen vorgegebenen Zählerstand erreicht, welcher der Impulslänge eines Ausgleichimpulses entspricht. Ist dies der Fall, so ist eine Impulsfolge von fünf Ausgleichimpulsen detektiert worden, andernfalls wird die Impulsdauer weiterhin auf die Dauer eines Vertikal-Einschnittimpulses geprüft.

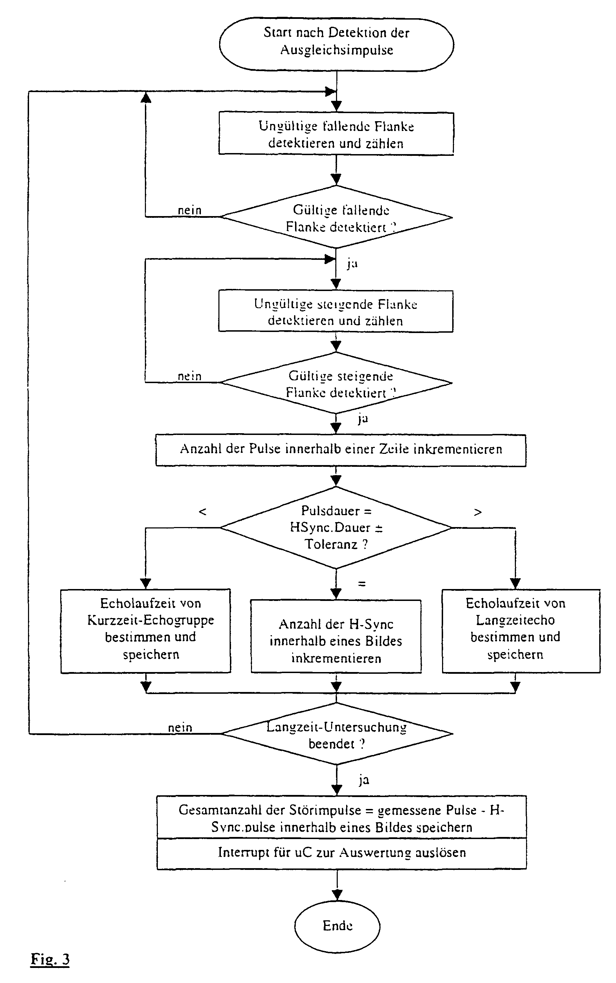

Es wird nun anhand des in der Figur 3 abgebildeten Flußdiagrammes beispielhaft erläutert, wie die Horizontal-Synchronimpulse. Störimpulse und Echoimpulse detektiert werden und ein Kriterium zur Bewertung der Signalqualität erzeugt wird.

Eine gemessene Impulsdauer wird mit der Impulsdauer eines Horizontal-Synchronimpulses verglichen. Stimmt eine gemessene Impulsdauer mit der Dauer eines Horizontal-Synchronimpulses überein, so wird dieser Impuls als Horizontal-Synchronimpuls interpretiert. Ist die gemessene Impulsdauer dagegen kleiner als die Dauer eines Horizontal-Synchronimpulses, so wird der Impuls als Kurzzeitechoimpuls interpretiert, während er als Langzeitechoimpuls interpretiert wird, wenn die gemessene Impulsdauer größer als die Dauer eines Horizontal-Synchronimpulses ist. Werden keine Horizontalsynchronimpulse detektiert, wird wieder auf die Dauer eines Vertikal-Einschnittimpulses geprüft.

Besonders vorteilhaft ist es, bei der Detektion der Vertikal-Einschnittimpulse, der Ausgleich- und der Horizontal-Synchronimpulse zwischen gültigen und ungültigen Flanken zu unterscheiden. Eine Flanke, auf die innerhalb einer vorgegebenen Zeit, z.B. eine Mikrosekunde, eine weitere Flanke folgt, wird als ungültige Flanke und der von den beiden Flanken gebildete Impuls als Störimpuls interpretiert. Durch diese Maßnahme werden kurze Störimpulse einerseits detektiert, während andererseits unsaubere Impulse mit Prellern nicht als Vertikal-Einschnitt-, Ausgleich- oder Horizontal-Synchronimpulse interpretiert werden.

Weiter ist es vorteilhaft, für die jeweils zu messende Impulsdauer eine Toleranzspanne vorzusehen.

Die Anzahl der detektierten Störimpulse, Kurzzeit- und Langzeitechoimpulse sowie der Horizontal-Synchronimpulse wird für jeweils ein Halb- oder Vollbild gespeichert und dient als Kriterium für die Signalqualität.

Gemäß dem im Anspruch angegebenen Ausführungsbeispiel der Erfindung wird in einer Diversity-Empfanasanlage mit mehreren Empfängern die Anzahl der detektierten Störimpulse. Kurzzeitecho- und Langzeitechoimpulse gespeichert. Aus den gespeicherten Werten wird für jeden Empfänger ein Kriterium für die Signalqualität abgeleitet, so daß auf den Empfänger mit der besten Signalqualität umgeschaltet werden kann. Beispielsweise kann der Empfänger mit der geringsten Anzahl an Stör-, Kurzzeitecho- und Langzeitechoimpulsen ausgewählt werden.

Bei einem weiteren Ausführungsbeispiel der Erfindung ist vorgesehen, die Anzahl der Stör-, Kurzzeitecho- und Langzeitechoimpulse mit Faktoren zu gewichten und die so gewichteten Zahlen zu einer Gesamtmaßzahl zu addieren. Derjenige Empfänger mit der kleinsten Gesamtmaßzahl bzw. Summe liefert das beste Signal.

Ein wesentlicher Vorteil der Erfindung liegt darin, daß die Detektion und Auswertung der Vertikal-Einschnitt-, der Ausgleich- und der Horizontal-Synchronimpulse nacheinander in drei Schritten erfolgt, weil dadurch eine verhältnismäßig große Anzahl an Logik-Zellen gespart wird. So lassen sich z.B. für jeden der drei Schritte größtenteils dieselben Zähler einsetzen.

Bei schlechten Empfangsverhältnissen kann es vorkommen, daß weder Vertikal-Einschnittimpulse noch Horizontal-Synchronimpulse detektiert werden. In diesen Fällen ist bei einem weiteren Ausführungsbeispiel vorgesehen, die Regelsignale der automatischen Verstärkungsregelung, im Englischen mit AGC abgekürzt, der einzelnen Empfänger einer Diversity-Empfangsanlage miteinander zu vergleichen und den Empfänger, dessen Regelsignal den kleinsten Pegel aufweist, auszuwählen. In einer Ausgestaltung dieses Ausführungsbeispieles ist es vorgesehen, nur dann auf einen anderen Empfänger umzuschalten, wenn dessen Pegel um einen vorgegebenen Mindestwert kleiner als die anderen Pegel ist. Andernfalls wird noch nicht eine Umschaltung auf einen anderen Empfänger vorgenommen, um allzu häufige und unnötige Umschaltvorgänge zu vermeiden.

Die Erfindung läßt sich besonders vorteilhaft in einer Diversitv-Empfangsanlage mit mehreren Empfängern einsetzen, um den jeweils das beste Signal empfangenden Empfänger auswählen zu können. Sie ist aber auch allgemein dafür geeignet, die Qualität eines Fernsehsignales zu bewerten, unabhängig davon, für welchen Zweck die Bewertung der Qualität vorgesehen ist.

## Patentansprüche

1. Verfahren zur Bewertung der Qualität eines Fernsehsignales **gekennzeichnet durch** folgende Verfahrensschritte:
es werden die fünf Vertikal-Einschnittimpulse detektiert;
nur wenn die fünf Vertikal-Einschnittimpulse detektiert worden sind, wird mit der Detektion der fünf Ausgleichimpulse begonnen;
nur wenn nach den fünf Vertikal-Einschnittimpulsen auch die folgenden fünf Ausgleichimpulse detektiert worden sind, werden die Horizontal-Synchronimpulse Echoimpulse und Störimpulse detektiert;
die Anzahl der detektierten Horizontal-Synchronimpulse, Störimpulse und Echoimpulse dient als Kriterium für die Signalqualität.

2. Verfahren nach Anspruch 2, **gekennzeichnet durch** folgende Verfahrensschritte:
a) Detektion der Vertikal-Einschnittimpulse;
eine Flanke, auf die in einer vorgegebenen Zeit eine weitere Flanke folgt, wird als ungültige Flanke interpretiert;
die Impulsdauer von Impulsen mit gültigen Flanken wird gemessen;
entspricht die Impulsdauer innerhalb einer vorgegebenen Toleranz der eines Vertikal-Einschnittimpulses, so wird dieser Impuls als Vertikal-Einschnittimpuls interpretiert;
wird fünf mal hintereinander innerhalb einer Zeitspanne, die einer Impulsfolge von fünf Vertikal-Einschnittimpulsen entspricht, ein Vertikal-Einschnittimpuls detektiert, so wird im nachfolgenden Schritt b) mit der Detektion der fünf folgenden Ausgleichimpulse begonnen, andernfalls wird weiterhin die Dauer eintreffender Impulse, auf die Dauer eines Vertikal-Einschnittimpulses geprüft.
b) Detektion der Ausgleichimpulse
eine Flanke, auf die in einer vorgegebenen Zeit eine weitere Flanke folgt, wird als ungültige Flanke interpretiert;
die Impulsdauer von Impulsen mit gültigen Flanken wird gemessen;
entspricht die Impulsdauer innerhalb einer vorgebbaren Toleranz der eines Ausgleichimpulses, so wird dieser Impuls als Ausgleichimpuls interpretiert;
wird fünf mal hintereinander innerhalb einer Zeitspanne, die einer Impulsfolge von fünf Ausgleichimpulsen entspricht, ein Ausgleichimpuls detektiert, so wird in nachfolgenden Schritt c) mit der Detektion der Horizontal-Synchronimpulse, der Störimpulse und der Echoimpulse begonnen, andernfalls wird weiter entsprechend Schritt a) die Impulsdauer auf die Dauer eines Vertikal-Einschnittimpulses geprüft;
c) Detektion der Horizontal-Synchronimpulse, Störimpulse und Echoimpulse
eine Flanke, auf die in einer vorgegebenen Zeit eine weitere Flanke folgt, wird als ungültige Flanke interpretiert und der von diesen beiden Flanken gebildete Impuls als Störimpuls interpretiert;
die Impulsdauer von Impulsen mit gültigen Flanken wird gemessen;
entspricht die Impulsdauer eines Impulses innerhalb einer vorgegebenen Toleranz der eines Horizontal-Synchronimpulses, so wird dieser Impuls als Horizontal-Synchronimpuls interpretiert;
ist die Impulsdauer eines Impulses geringer als die Dauer eines Horizontal-Synchronimpulses abzüglich der vorgegebenen Toleranz, so wird dieser Impuls als Kurzzeitechoimpuls interpretiert;
ist die Impulsdauer eines Impulses größer als die Dauer eines Horizontal-Synchronimpulses zuzüglich der vorgegebenen Toleranz, so wird dieser Impuls als Langzeitecho interpretiert:
während eines Halb- oder Vollbildes werden die detektierten Horizontal-Synchronimpulse, die detektierten Kurzzeitechoimputse, die detektierten Langzeitechoimpulse und die nach den Ausgleichimpulsen detektierten Störimpulse gezählt, und deren jeweilige Anzahl wird gespeichert;
werden keine Horizontalsynchronimpulse detektiert, wird weiter entsprechend Schritt a) die Impulsdauer auf die Dauer eines Vertikal-Einschnittimpulses geprüft;
die Anzahl der gespeicherten Impulse dient als Kriterium für die Signalqualität.

3. Verfahren nach Anspruch 1 oder 2, **dadurch gekennzeichnet, daß** ein Zähler mit der ersten Flanke eines Impulses gestartet und mit der zweiten Flanke des Impulses zurückgesetzt wird, daß, wenn der Zähler fünf mal hintereinander in einer ersten vorgegebenen Zeit, welche der Impulsfolge von Vertikal-Einschnittimpulsen entspricht, einen ersten vorgegebenen Zählerstand annimmt, der der Impulslänge eines Vertikal-Einschnittimpulses entspricht, dem Zähler ein zweiter Zählerstand vorgegeben wird, welcher der Impulslänge eines Ausgleichimpulses entspricht, daß, wenn der Zähler anschließend fünf mal hintereinander in einer zweiten vorgegebenen Zeit, welche der Impulsfolge von fünf Ausgleichimpulsen entspricht, den zweiten vorgegebenen Zählerstand annimmt, mit der Detektion der Horizontal-Synchronimpulse, der Störimpulse und der Echoimpulse begonnen wird.

4. Verfahren nach einem der Ansprüche 1. 2 oder 3, **dadurch gekennzeichnet, daß** eine Flanke, auf die innerhalb einer vorgegebenen Zeit eine weitere Flanke folgt, als ungültige Flanke interpretiert wird und der von diesen beiden Flanken gebildete Impuls als Störimpuls interpretiert wird.

5. Verfahren, **dadurch gekennzeichnet, daß** in einer Diversity-Empfangsanlage mit mehreren Empfängern für jeden Empfänger die Anzahl der nach einem Verfahren gemäß einem der Ansprüche 2 -4 detektierten Störimpulse. Kurzzeitechoimpulse und Langzeitechoimpulse gespeichert wird und als Kriterium zur Auswahl des Empfängers mit der besten Signalqualität dient.

6. Verfahren nach Anspruch 5. **dadurch gekennzeichnet, daß** die Anzahl der Störimpulse, der Kurzzeitechoimpulse und der Langzeitechoimpulse jeweils mit Faktoren gewichtet wird und daß die gewichteten Zahlen zu einer Gesamtmaßzahl addiert werden, die als Kriterium für die Signalqualität benutzt wird.

7. Verfahren nach Anspruch 6, **dadurch gekennzeichnet, daß** der Empfänger mit der kleinsten Gesamtmaßzahl als Empfänger mit der besten Signalqualität ausgewählt wird.

8. Verfahren nach einem der Ansprüche 5, 6 oder 7, **dadurch gekennzeichnet, daß** im Falle, daß keine Horizontal-Synchronimpulse detektiert werden können, die Regelsignale der automatischen Verstärkungsregelung der einzelnen Empfänger miteinander verglichen werden und derjenige Empfänger ausgewählt wird, dessen Regelsignal den kleinsten Pegel hat.

9. Verfahren nach Anspruch 8, **dadurch gekennzeichnet, daß** nur dann auf einen anderen Empfänger umgeschaltet wird, wenn dessen Pegel um einen vorgebbaren Mindestwert kleiner ist als die Pegel der Regelsignale der restlichen Empfänger.

## Claims

1. Method for evaluating the quality of a television signal, **characterised by** the following method steps:
- the five vertical serration pulses are detected;
- only when the five vertical serration pulses have been detected is the detection of the five equalising pulses begun;
- only when the five equalizing pulses following the five vertical serration pulses have been detected the horizontal sync pulses, echo pulses, and interference pulses are detected;
- the number of detected horizontal sync pulses, interference pulses and echo pulses serves as a criterion for the signal quality.

2. Method as claimed in Claim 1, **characterised by** the following method steps:
a) detection of the vertical serration pulses:
- an edge which is followed in a predetermined time by a further edge is interpreted as an invalid edge;
- the pulse duration of pulses with valid edges is measured;
- if the pulse duration within a predetermined tolerance corresponds to that of a vertical serration pulse, then the said pulse is interpreted as a vertical serration pulse;
- if a vertical serration pulse is detected five times in succession within a time period which corresponds a pulse train of five vertical serration pulses, then in the following step b) the detection of the five following equalising pulses is begun, otherwise furthermore the duration of incoming pulses is checked with respect to the duration of a vertical serration pulse.
b) detection of the equalising pulses:
- an edge which is followed by a further edge in a predetermined time is interpreted as an invalid edge;
- the pulse duration of pulses with valid edges is measured;
- if the pulse duration within a predetermined tolerance corresponds to that of an equalising pulse then this pulse is interpreted as an equalising pulse;
- if an equalising pulse is detected five times in succession within a time period which corresponds to a pulse train of five equalising pulses, then in the following step c) the detection of the horizontal sync pulses, the interference pulses and the echo pulses is begun, otherwise in accordance with step a) the pulse duration is checked further with respect to the duration of a vertical serration pulse;
c) detection of the horizontal sync pulses, interference pulses, and echo pulses:
- an edge followed by a further edge in a predetermined time is interpreted as an invalid edge and the pulse formed by these two edges is interpreted as an interference pulse;
- the pulse duration of pulses with valid edges is measured;
- if the pulse duration within a given tolerance corresponds to that of a horizontal sync pulse then this pulse is interpreted as a horizontal sync pulse;
- if the pulse duration of a pulse is less than the duration of a horizontal sync pulse minus the predetermined tolerance then this pulse is interpreted as a momentary echo pulse;
- if the pulse duration of a pulse is greater than the duration of a horizontal sync pulse plus the predetermined tolerance then this pulse is interpreted as a sustained echo pulse;
- during a field or a frame the detected horizontal sync pulses, the detected momentary echo pulses, the detected sustained echo pulses, and the interference pulses detected after the equalising pulses are counted and the respective numbers of the said pulses are stored;
- if no horizontal sync pulses are detected, in accordance with step a the pulse duration is further checked with respect to the duration of a vertical serration pulse;
- the number of stored pulses serves as a criterion for the signal quality.

3. Method as claimed in Claim 1 or 2, **characterised in that** a counter is started with the first edge of a pulse and is reset with the second edge of the pulse, that when five times in succession in a first predetermined time which corresponds to the pulse train of vertical serration pulses the counter assumes a first predetermined counter reading which corresponds to the pulse length of a vertical serration pulse, a second counter reading for the counter is predetermined which corresponds to the pulse length of an equalising pulse, that when five times in succession in a second predetermined time which corresponds to the pulse train of five equalising pulses the counter assumes the second predetermined counter reading, the detection of the horizontal sync pulses, the interference pulses, and the echo pulses is begun.

4. Method as claimed in any one of Claims 1, 2 or 3, **characterised in that** an edge which is followed by a further edge within a predetermined time is interpreted as an invalid edge and the pulse formed by these two edges is interpreted as an interference pulse.

5. Method, **characterised in that** in a diversity reception system with a plurality of receivers, for each receiver the number of interference pulses, momentary echo pulses and sustained echo pulses detected using a method as claimed in any one of Claims 2 to 4 is stored and serves as a criterion for selection of the receiver with the best signal quality.

6. Method as claimed in Claim 5, **characterised in that** the number of interference pulses, momentary echo pulses and sustained echo pulses is weighted in each case with factors and that the weighted numbers are added to forming a total value which is used as a criterion for the signal quality.

7. Method as claimed in Claim 6, **characterised in that** the receiver with the smallest total value is selected as the receiver with the best signal quality.

8. Method as claimed in any one of Claims 5, 6 or 7, **characterised in that** in the even that no horizontal sync pulses can be detected the control signals of an automatic gain control of the individual receivers are compared with one another and the receiver in which the control signal has the lowest level is selected.

9. Method as claimed in Claim 8, **characterised in that** the system changes over from one receiver to another only when the level of the control signals of that receiver is less by a predetermined minimum value than the levels of the control signals of the remaining receivers.

## Revendications

1. Procédé pour évaluer la qualité d'un signal de télévision, **caractérisé par** les étapes de procédé suivantes:
les cinq impulsions de coupure verticales sont détectées;
seulement lorsque les cinq impulsions de coupure verticales ont été détectées, on commence la détection des cinq impulsions d'égalisation;
seulement lorsque les cinq impulsions d'égalisation ont été détectées après les cinq impulsions de coupure verticales, les impulsions synchrones horizontales, les impulsions d'écho et les impulsions parasites sont détectées;
le nombre d'impulsions synchrones horizontales, d'impulsions parasites et d'impulsions d'écho détectées servant en tant que critères pour la qualité du signal.

2. Procédé selon la revendication 1, **caractérisé par** les étapes de procédé suivantes:
(a) détection des impulsions de coupure verticales;
un flanc, qui est suivi par un autre flanc dans un temps prédéterminé, sera interprété comme flanc non valable,
la durée d'impulsion des impulsions avec des flancs valables est mesurée;
dans le cas où la durée d'impulsion des impulsions dans une tolérance prédéterminée correspond à celle d'une impulsion de coupure verticale, cette impulsion sera interprétée en tant qu'impulsion de coupure verticale;
dans le cas où une impulsion de coupure verticale est détectée cinq fois à la suite dans un intervalle de temps qui correspond à une suite d'impulsions de cinq impulsions de coupure verticales, on commence alors dans l'étape b suivante, la détection des cinq impulsions d'égalisation suivantes, sinon on continue de vérifier la durée des impulsions qui arrivent par rapport à la durée d'une impulsion de coupure verticale,
(b) détection des impulsions d'égalisation
un flanc, qui est suivi par un autre flanc dans un temps prédéterminé, sera interprété en tant que flanc non valable;
la durée d'impulsion des impulsions avec des flancs valables est mesurée;
dans le cas où la durée d'impulsion dans une tolérance prédéterminée correspond à celle d'une impulsion d'égalisation, cette impulsion sera interprétée en tant qu'impulsion d'égalisation;
dans le cas où si une impulsion d'égalisation est détectée cinq fois à la suite dans un intervalle de temps qui correspond à une suite d'impulsions de cinq impulsions d'égalisation, on commence alors dans l'étape suivante (c) la détection des impulsions synchrones horizontales, des impulsions parasites et des impulsions d'écho, sinon on continue à vérifier selon l'étape (a) la durée d'impulsion par rapport à la durée d'une impulsion de coupure verticale;
c) détection des impulsions synchrones horizontales, des impulsions parasites et des impulsions d'écho
un flanc qui est suivi par un autre flanc dans un temps prédéterminé sera interprété en tant que flanc non valable et l'impulsion formée par ces deux flancs est interprétée en tant que signal parasite;
la durée d'impulsion des impulsions avec des flancs valables est mesurée;
dans le cas où la durée d'impulsion d'une impulsion dans une tolérance prédéterminée correspond à celle d'une impulsion synchrone horizontale, cette impulsion est interprétée en tant qu'impulsion synchrone horizontale;
dans le cas où la durée d'impulsion d'une impulsion est plus petite à la durée d'une impulsion synchrone horizontale, déduction faite de la tolérance prédéterminée, alors cette impulsion est interprétée en tant qu'impulsion d'écho de courte durée;
dans le cas où la durée d'impulsion d'une impulsion est supérieure à la durée d'une impulsion synchrone horizontale en ajoutant la tolérance prédéterminée, alors cette impulsion est interprétée en tant qu'écho de longue durée;
pendant une image partielle ou complète, on compte les impulsions synchrones horizontales détectées, les impulsions d'écho de courte durée détectées, les impulsions d'écho de longue durée détectées et les impulsions parasites détectées après les impulsions d'égalisation, et ces quantités respectives sont enregistrées;
dans le cas où aucune impulsion synchrone horizontale n'a été détectée, on continue à vérifier selon l'étape (a) la durée d'impulsion par rapport à la durée d'une impulsion de coupure verticale;
la quantité d'impulsion enregistrée sert en tant que critère pour la qualité du signal.

3. Procédé selon la revendication 1 ou 2, **caractérisé en ce qu'**un compteur est démarré avec le premier flanc d'une impulsion et est remis à zéro avec le second flanc de l'impulsion, **en ce que**, lorsque le compteur cinq fois à la suite, dans un premier temps prédéterminé, qui correspond à la suite d'impulsions de coupure verticales prend un premier état de compteur prédéterminé, qui correspond à la longueur d'impulsion d'une impulsion de coupure verticale, on donne au compteur un second état de compteur, qui correspond à la longueur d'impulsion d'une impulsion d'égalisation, **en ce que** lorsque le compteur présente ensuite cinq fois à la suite, dans un second temps prédéterminé, qui correspond à la suite d'impulsions de cinq impulsions d'égalisation, le second état de compteur prédéterminé, en commence la détection des impulsions synchrones horizontales, des impulsions parasites et des impulsions d'écho.

4. Procédé selon l'une des revendications 1, 2 ou 3, **caractérisé en ce qu'**un flanc, qui est suivi par un autre flanc dans un temps prédéterminé sera interprété comme un flanc non valable, et l'impulsion formée par ces deux flancs sera interprétée comme une impulsion parasite.

5. Procédé, **caractérisé en ce que** dans une installation de réception-diversité comprenant plusieurs récepteurs, pour chaque récepteur le nombre d'impulsions parasites, d'impulsions écho de courte durée et d'impulsions d'écho de longueur durée détecté selon le procédé conforme à une des revendications 2 à 4 est enregistré et sert de critère pour effectuer le choix du récepteur ayant la meilleure qualité de signal.

6. Procédé selon la revendication 5, **caractérisé en ce que** le nombre d'impulsions parasites, d'impulsions d'écho de courte durée et d'impulsions d'écho de longue durée est respectivement pondéré avec des facteurs et **en ce que** les nombres pondérés sont ajoutés pour former un nombre de mesure global qui va servir de critère pour la qualité du signal.

7. Procédé selon la revendication 6, **caractérisé en ce que** le récepteur avec le plus petit nombre de mesure global sera choisi comme récepteur ayant la meilleure qualité de signal.

8. Procédé selon l'une des revendications 5, 6 ou 7, **caractérisé en ce que** dans le cas où aucune impulsion synchrone horizontale ne peut être détectée, les signaux de commande du réglage automatique de gain des récepteurs individuels sont comparés entre eux et on choisi le récepteur dont le signal de commande a le niveau le plus bas.

9. Procédé selon la revendication 8, **caractérisé en ce que** l'on commute sur un autre récepteur seulement si son niveau est inférieur d'une valeur seuil prédéterminée au niveau des signaux de commande des récepteurs restants.
